# EUROPÄISCHE PATENTSCHRIFT

(11) **EP 2 308 809 B1**
(45) Veröffentlichungstag und Bekanntmachung des Hinweises auf die Patenterteilung: **30.10.2019**
(21) Anmeldenummer: 10176883.6
(22) Anmeldetag: 15.09.2010
(51) Int. Cl.: C04B 35/532, C04B 35/573, C04B 35/626, C04B 33/00, C03C 14/00, C08K 3/00, C04B 33/36, C04B 35/71

(54) **Werkstoff, Verfahren zur Herstellung eines Werkstoffs und seine Verwendung**
Material, method for producing a material and use thereof
Matière active, procédé de fabrication d'une matière active et son utilisation

(30) Priorität: 06.10.2009 DE 102009048424
(43) Veröffentlichungstag der Anmeldung: 13.04.2011
(73) Patentinhaber: SGL Carbon SE, 65201 Wiesbaden (DE)
(72) Erfinder: Frohs, Wilhelm, 86695 Allmannshofen (DE); Kienzle, Andreas, 86753 Möttingen (DE); Krätschmer, Ingrid, 86485 Biberbach (DE)

(56) Entgegenhaltungen:
- EP-A1- 0 718 249
- EP-A1- 1 205 437
- EP-A1- 1 681 278
- WO-A1-00/18702
- DE-A1- 1 471 134
- DE-A1- 1 471 139
- DE-A1- 2 834 315
- DE-B- 1 098 677
- GB-A- 1 058 461
- JP-A- 63 242 944
- JP-A- 2004 256 592
- US-A- 4 627 945
- US-A- 4 978 640
- US-A- 5 061 660
- US-A1- 2006 241 236
- F.A. KHALID ET AL.: "Study of microstructure and interfaces in an aluminium-C60 composite material", ACTA MATERIALIA, Bd. 51, 2003, Seiten 4575-4582, XP002682953,

## Beschreibung

Die vorliegende Erfindung betrifft einen Werkstoff, ein Verfahren zur Herstellung eines Werkstoffs sowie seine Verwendung.

Werkstoffe für Bauteile enthaltend eine keramische Matrix, insbesondere eine Siliciumcarbidmatrix, sind bekannt. Im Stand der Technik werden keramische Werkstoffe beschrieben, welche Verstärkungselemente enthalten. So beschreibt z.B. DE 1471134 eine nicht schwindende Zementmischung umfassend eine kleine Menge an Wirbelschichtkoks. WO 00/18702 bezieht sich auf ein Verfahren zur Herstellung eines Diamantverbundwerkstoffs enthaltend Diamantteilchen, welche zwiebelschalenartig sein können, in einer Siliciumcarbid-Matrix; DE 2834315 offenbart einen Siliciumcarbidwerkstoff, wobei Kohlenstoffhalbzeuge auf der Grundlage von kohlenstoffhaltigen Füllstoffen und Bindemittel hergestellt und mit Silicium infiltriert werden. Als Füllstoffe können z.B. Erdöl- und Steinkohlenkoks eingesetzt werden, welche im Rahmen der Silicierung in Siliciumcarbid umgewandelt werden; EP 1681278 bezieht sich auf ein Verfahren zur Carbidbildner-Infiltration, insbesondere zur Silicierung, eines porösen kohlenstoffhaltigen Vorkörpers, wobei zur Herstellung dieses Vorkörpers Koks eingesetzt werden kann.

Keramische Materialien weisen jedoch im Allgemeinen den Nachteil auf, unter mechanisch und thermisch induzierten Belastungen sprödbrüchig zu sein. Dies schränkt ihre Verwendung stark ein.

Eine Schlagzähigkeitsverbesserung von Siliciumcarbid mit Kohlenstofffasern oder keramischen Fasern wird daher beispielsweise in der Industrie standardmäßig eingesetzt. Die Nachteile dieser Werkstoffe sind hohe Faserkosten und ein komplizierter Herstellungsprozess, der eine breite Anwendung in der Industrie und insbesondere in Fahrzeugen einschränkt.

Aufgabe der vorliegenden Erfindung ist daher, einen Werkstoff zur Verfügung zu stellen, der nicht sprödbrüchig ist sowie kostengünstig und einfach herstellbar ist.

Erfindungsgemäß wird die Aufgabe durch einen Werkstoff gemäß Anspruch 1 so wie durch ein Verfahren gemäß Anspruch 10 gelöst.

Erfindungsgemäß wird ein Werkstoff zur Verfügung gestellt, der eine Matrix aus Siliciumcarbid und mindestens ein darin eingebrachtes Verstärkungselement umfasst, wobei das Verstärkungselement eine kugel- bis ellipsoidförmige Gestalt aufweist und zwiebelschalenartig, d.h. mindestens 3 Schichten aufweisend, aufgebaut ist, wobei das Verstärkungselement Koks darstellt. Im Sinne der vorliegenden Erfindung wird mit dem Ausdruck "zwiebelschalenartig aufgebaut" ein mehrschichtiger Aufbau bezeichnet, der eine Innenschicht von kugel- bis ellipsoidförmiger Gestalt umfasst, die vollständig oder teilweise von mindestens einer Zwischenschicht und einer Außenschicht bedeckt ist. Der Ausdruck "mehrschichtiger Aufbau" bedeutet, dass das Verstärkungselement mindestens 3 Schichten, d.h. eine Innenschicht, eine Außenschicht und mindestens eine Zwischenschicht aufweist, wobei die Zwischen- und Außenschichten die Innenschicht zumindest teilweise umhüllen. Vorzugsweise ist die Matrix von dem mindestens einen Verstärkungselement homogen durchsetzt.

Durch die Durchsetzung der Matrix mit mindestens einem zwiebelschalenartig aufgebauten kugel- bis ellipsoidförmigen Verstärkungselement wird ein Werkstoff mit einer verbesserten Bruchzähigkeit erhalten, der zudem eine hohe Festigkeit und hohe Steifheit aufweist. Weiterhin können im Hinblick auf faserverstärkte Werkstoffe Kosten aufgrund geringerer Rohmaterialkosten und des möglichen Einsatzes von Massenformgebungsprozessen wie beispielsweise Spritzgießen, Schlickergießen oder Extrudieren eingespart werden. Diese Formgebungsverfahren bieten sich aufgrund der hervorragenden Fließfähigkeit der Masse an, welche insbesondere in dem Zusatz sphärolithischer Teilchen zu sehen ist.

Die Auswahl der Materialien der Matrix und des Verstärkungselements ist derart, dass das Verstärkungselement von der Matrix weder während der Verarbeitung noch bei der Verwendung des Werkstoffes vollständig beschädigt oder zerstört wird. Das Material der Matrix und das Material des Verstärkungselements können so ausgewählt sein, dass sie sich inert zueinander verhalten. Alternativ kann das Verstärkungselement auch mit einem Mittel vorbehandelt sein, das als Schutz gegenüber der Matrix wirkt (Beschichtung).

Ein Kokspartikel-verstärkter Werkstoff mit einer Matrix aus Siliciumcarbid, welches eine nichtoxidische Keramik ist, weist eine hohe Härte, Chemikalien-, Oxidations- und Wärmebeständigkeit auf. Erhalten wird solch ein Werkstoff, indem Koks als Verstärkungselement in eine Matrix aus Kunstharz wie beispielsweise Phenolharz eingebracht wird, welches carbonisiert, ggf. bei Graphitierungstemperaturen behandelt und anschließend siliziert wird. Die Matrix kann daher auch eine Kombination aus Kohlenstoff und Siliciumcarbid umfassen.

Das Verstärkungselement ist zwiebelschalenartig aufgebaut und weist mindestens 3 Schichten auf. Zumindest die Zwischen- und Außenschichten des Verstärkungselements sind bevorzugt derart gewählt, dass sie sich inert gegenüber der Matrix verhalten und das Kernmaterial in Form der Innenschicht vollständig umhüllen, wenn das Kernmaterial sich reaktiv zu der Matrix verhält. Die Zwischen- und Außenschichten dienen dann als Hülle für das Kernmaterial des Verstärkungselements und sind insbesondere ein Schutz, wenn eine mögliche Reaktion zwischen Kernmaterial und Matrix unterbunden werden soll. Die Innen-, mindestens eine Zwischen- und Außenschichten können unterschiedliche Materialien umfassen. Alternativ sind die Innen-, mindestens eine Zwischen- und Außenschichten aus einem Material wie beispielsweise Kohlenstoff aufgebaut. In einer bevorzugten Ausführungsform liegt das Verstärkungselement Koks sphärolitisch mit einer Zwiebelschalenstruktur vor.

Weiterhin bevorzugt stellt das Verstärkungselement Koks dar, der schwer bis nicht graphitierbar, hochisotrop, hart und wenig porös ist und eine niedrige spezifische Oberfläche aufweist. Der durch Röntgenbeugung ermittelbare mittlere Schichtabstand d₀₀₂ des Kokses beträgt bevorzugt mindestens 0,35 nm, und die scheinbare Stapelhöhe L_{c} liegt bevorzugt unterhalb von 5,0 nm. Ein derartiger Koks ist aus Rohölfraktionen oder Steamcrackerrückständen erhältlich, welche beim Quenchen von Reaktionsgas in der Synthese von ungesättigten Kohlenwasserstoffen (Acetylen) verwendet wird, wobei das Quenchöl/Russgemisch zu einem Koker abgeführt wird, der auf etwa 500 °C erhitzt wird. Flüchtige Bestandteile des Quenchöls verdampfen in dem Koker, von dessen Boden der Koks entnommen werden kann. Auf diese Weise wird ein feinkörniger zwiebelschalenartiger Koks gewonnen, der neben den vorstehend beschriebenen Eigenschaften hochrein ist und wenig bis keine Asche- und Mineralstoffgehalte aufweist. Der Koks kann aber auch hohe Asche- und Mineralstoffgehalte aufweisen und weniger rein sein. Die Reinheit des Kokses ist von der Reinheit des verwendeten Quenchöls abhängig. Üblicherweise ist Koks ein Feststoff mit hohem Kohlenstoffgehalt und im nicht graphitischen Zustand und wird durch Pyrolyse von organischem Material hergestellt, welches zumindest teilweise während des Carbonisierprozesses einen flüssigen oder flüssigkristallinen Zustand durchlaufen hat. Vermutlich behindern die Russpartikel die Ausbildung einer ungestörten Flüssigphase (Mesophase) und liefern einen Koks mit hoher Härte und schlechter Graphitierbarkeit. Der aus dem Gasquenchverfahren erhaltene Koks ist daher durch Wärmebehandlung bei Temperaturen oberhalb von 2200 °C nur wenig graphitierbar. Nach einer Wärmebehandlung bei 2800°C beträgt beispielsweise der aus dem Röntgenbeugungspeak d₀₀₂ ermittelte mittlere Schichtabstand c/2 0,34 nm oder mehr und die Kristallatgröße in die c-Richtung L_{c} weniger als 20 nm und die Kristallatgröße La₁₁₀ weniger als 50 nm, bevorzugt weniger als 40 nm. Besonders bevorzugt ist der Koks von hoher Härte, schlecht graphitierbar und der mittlere Schichtabstand c/2 nach 2800°C Temperaturbehandlung größer oder gleich 0,34 nm, welches einem maximalen Graphitierungsgrad nach Maire und Mehring von maximal 46,5 % entspricht.

Das schalenförmig aufgebaute Verstärkungselement kann weiterhin mindestens eine Verstärkungskomponente in seiner Struktur aufweisen. Ein Beispiel hierfür ist der Einbau von Russpartikeln, wie sie bei der Acetylensynthese zwangsläufig entstehen. Eine Alternative zu einem Koks aus der Acetylensynthese sind sphäroidale Kokspartikel aus dem Fluid / Flexicoking Verfahren. Auch hier handelt es sich um schlecht graphitierbare, harte Kokse, für die die oben gemachten röntgenstrukturellen Angaben ebenfalls zutreffend sind.

In einer bevorzugten Ausführungsform weist das Verstärkungselement ein Länge-/Durchmesser-Verhältnis von 1 bis 10, bevorzugter von 1 bis 5, bevorzugter von 1 bis 3, auf. Je mehr sich die Gestalt des Verstärkungselements an eine kugelförmige Struktur annähert, desto besser sind die Fließfähigkeit der Masse und die mechanischen Eigenschaften des Werkstoffes.

Das Verstärkungselement kann alternativ thermisch vorbehandelt sein. Die thermische Vorbehandlung umfasst eine Calcinierung, d.h. eine Wärmebehandlung des Verstärkungselements bei einer Temperatur in dem Bereich zwischen 700 bis 1600 °C, bevorzugt 1000 bis 1500 °C, bevorzugter 1100 bis 1300 °C, ggf. unter einer reduzierenden Atmosphäre. Eine derartige Behandlung führt insbesondere zum Verdampfen von Wasser, flüchtigen brennbaren Stoffen wie beispielsweise Kohlenwasserstoffen wie Methan, Kohlenmonoxid bzw. Wasserstoff.

Weiterhin alternativ kann das Verstärkungselement mit einem Oxidationsschutz vorbehandelt sein. Der Oxidationsschutz ist insbesondere dann von Interesse, wenn das Verstärkungselement ein oxidationsempfindliches Material darstellt. Als Oxidationsschutz kommen Verbindungen in Frage, die leichter oxidierbar sind als das Verstärkungselement Beispielsweise kommen in dem Fall von Koks als Verstärkungselement folgende Oxidationsschutzmittel in Betracht. Borsalze können in den Koks eingebracht sein und weiterhin alternativ oder zusätzlich kann der Koks mit Silicium Verbindungen vorbehandelt sein, die Siliciumdioxid-Häute bilden.

Weiterhin alternativ kann das Verstärkungselement durch Imprägnierung vorbehandelt sein. Die Imprägnierung umhüllt das Verstärkungselement und wirkt als Schutzmittel gegen mögliche Reaktionen des Verstärkungselements mit Komponenten der Matrix. Weiterhin kann das Verstärkungselement alternativ anoxidiert sein.

In einer bevorzugten Ausführungsform der vorliegenden Erfindung enthält die Matrix weiterhin mindestens einen Füllstoff. D.h. neben dem Verstärkungselement von kugel- bis ellipsoidförmiger Gestalt und mit einem zwiebelschalenartigen Aufbau ist die Matrix von mindestens einem Füllstoff durchsetzt. Der Füllstoff kann eine Faser darstellen. Die Faser kann als Langfaser in Form von einem Gelege, Band, Gewebe, Gewirke, Gestrick oder Vlies oder als Kurzfaser vorliegen. Der Füllstoff umfasst bevorzugt eine Kohlenstofffaser. Alternativ oder zusätzlich kann der Füllstoff ein kugel- bis ellipsoidförmiges Partikel darstellen. Beispielsweise ist der Füllstoff ausgewählt aus der Gruppe, bestehend aus Russ, Zirkondioxid, Siliciumdioxid, Aluminiumnitrid, Aluminiumoxid, Titandioxid, Titancarbid, Wolframcarbid und deren Mischungen.

Die Korngröße des Verstärkungselements beeinflusst die Dichte, Festigkeit, Aufnahmekapazität der Matrix und die Bruchenergie des Werkstoffs. In einer bevorzugten Ausführungsform beträgt die Korngröße des Verstärkungselements mindestens 1 µm. Bevorzugt liegt die Korngröße in dem Bereich von 5 µm bis 500 µm. Bevorzugter liegt die Korngröße des Verstärkungselements in dem Bereich von 10 bis 125 µm. Besonders bevorzugt liegt die Korngröße des Verstärkungselements in dem Bereich von 10 bis 60 µm. Je feinkörniger das Verstärkungselement ist, desto höher sind die Festigkeit und Dichte des Werkstoffs. Die gewünschte Korngröße des Verstärkungselements ist beispielsweise durch Sieben des Verstärkungselements erhältlich.

Der Werkstoff weist bevorzugt 30 bis 95 Gew.-%, bevorzugt 50 bis 90 Gew.-%, bevorzugter 75 bis 60 Gew.-%, Verstärkungselement und 5 bis 70 Gew.-%, bevorzugt 10 bis 50 Gew.-%, bevorzugter 25 bis 40 Gew.-%, Matrix auf, bezogen auf das Gesamtgewicht des Werkstoffs. Weiterhin weist der Werkstoff optional bis zu 40 Gew.-% Füllstoff auf, bezogen auf das Gesamtgewicht des Werkstoffs.

Ein Verfahren zur Herstellung des erfindungsgemäßen Werkstoffes umfasst die folgenden Schritte:
a) Bereitstellen von mindestens einem Verstärkungselement von kugel- bis ellipsoidförmiger Gestalt, das zwiebelschalenartig, d.h. mindestens 3 Schichten aufweisend, aufgebaut ist, wobei das Verstärkungselement Koks darstellt, und
b) Einbringen des Verstärkungselements in eine Matrix, wobei die Matrix Siliciumcarbid umfasst.

Durch das Einbringen von mindestens einem Verstärkungselement von kugel- bis ellipsoidförmiger Gestalt, das zwiebelschalenartig aufgebaut ist, in eine Matrix wird ein Werkstoff erhalten, der hochfest ist und eine hohe Bruchzähigkeit aufweist. Zudem ist die Ausgangsmasse gut formbar. Die Art des Einbringens des Verstärkungselements in die Matrix hängt von der Natur und Art der Matrix und des Verstärkungselements ab. Das Einbringen kann durch Infiltration, Druckguss, Imprägnieren des Verstärkungselements oder Mischen von ihm mit der Matrix durchgeführt werden.

Ein Wärmefließpressen ist insbesondere von Vorteil, wenn das Verstärkungselement Koks darstellt, wobei der Koks mit einem Kunstharz wie Novolak gemischt wird und einem Wärmefließpressen oder Spritzgussverfahren unterzogen wird. Anschließend kann das Kunstharz zu einer Kohlenstoffmatrix carbonisiert werden.

Anschließend kann der Werkstoff, der die Kohlenstoffmatrix und das Koks-Verstärkungselement umfasst, einer Silizierung zur Bildung einer Siliciumcarbid-Matrix unterzogen werden. Das Einbringen des Verstärkungselements in die Matrix kann bei Raumtemperatur oder bei erhöhter Temperatur, drucklos oder unter Druck realisiert werden.

Bevorzugt wird während des Schritts b) des erfindungsgemäßen Verfahrens die Matrix, in die das Verstärkungselement eingebracht wird, geformt. Beispielsweise kann eine Masse aus Matrix und Verstärkungselement in einer Wärmefließpresse zu einer gewünschten Form geformt werden. Durch die kugel- bis ellipsenförmige Gestalt des Verstärkungselements wird zusammen mit der Matrix eine Pressmasse erhalten, die sich sehr gut formen lässt. Es reichen niedrige Drücke unter Temperatur, um die Masse zum Fließen zu bringen.

In einer bevorzugten Ausführungsform umfasst Schritt b) des erfindungsgemäßen Verfahrens den Schritt Einbringen von mindestens einem Verstärkungselement und mindestens einem Füllstoff in die Matrix. Als Füllstoff kann eine Faser wie eine Kohlenstofffaser oder ein kugel- bis ellipsoidförmiges Partikel wie Russ, Zirkondioxid, Siliciumdioxid, Aluminiumnitrid, Aluminiumoxid, Titandioxid, Titancarbid, Wolframcarbid oder deren Mischungen eingesetzt werden. In dieser Ausführungsform wird das mindestens eine Verstärkungselement zusammen mit dem mindestens einen Füllstoff in die Matrix eingebracht. Vorzugsweise werden alle Ausgangsstoffe des erfindungsgemäßen Werkstoffs gemischt. In einer besonders bevorzugten Ausführungsform werden sphärolithischer Koks als Verstärkungselement und Kohlenstofffasern als Füllstoff mit einem Phenolharz wie Novolak gemischt.

In einer bevorzugten Ausführungsform umfasst das erfindungsgemäße Verfahren den folgenden Schritt c) Erzeugen einer Porosität zumindest an der Oberfläche des Werkstoffs im Anschluss an Schritt b). Durch diesen Schritt wird dem erfindungsgemäßen Werkstoff eine definierte Porosität verliehen. Somit wird anhand des erfindungsgemäßen Verfahrens nicht nur ein unporöser Werkstoff, sondern ebenfalls ein poröser Werkstoff erhalten, welcher als Bauteil Verwendung findet, das eine Trägerstruktur erfordert. Zum Beispiel ist eine definierte Porosität des erfindungsgemäßen Werkstoffs an seiner Oberfläche von Vorteil, wenn er als Katalysatorträger wie beispielsweise ein Russpartikelfilter Anwendung findet. Besondere Vorteile bietet die Durchführung dieser Verfahrensvariante auch bei der Verwendung des erfindungsgemäßen Werkstoffs als Knochenersatzmaterial, weil in seine Poren Knochenzellen eingelagert werden können, welche in der Lage sind, in einer durch den erfindungsgemäßen Werkstoff vorgegebenen gewünschten dreidimensionalen Struktur zu wachsen, wenn sie zusammen mit dem Werkstoff in den Körper eines Patienten implantiert sind. Hier kann die Porosität nicht nur an der Oberfläche des Werkstoffs erzeugt werden, sondern der ganze Werkstoff von Poren durchzogen werden. Auf diese Weise wird ein Werkstoff als dreidimensionales Trägergerüst ausgebildet, das, wenn es im Körper eines Patienten implantiert ist, von Zellen und Gefäßen durchwachsen werden kann.

Beispielsweise kann eine definierte Porosität bei dem erfindungsgemäßen Werkstoff, der Siliciumcarbid als Matrix und Koks als Verstärkungselement umfasst, durch Oxidation von Kokskörnern an der Oberfläche des Werkstoffs mittels Luft erzeugt werden. Die Oxidation des Werkstoffs läuft unter sehr kontrollierbaren und definierten Fortschrittsraten ab. Die Porengrößen und -verteilung hängen dabei von den eingesetzten Koks-Korngrößen und -mengen ab.

In einer bevorzugten Ausführungsform weist das bei dem erfindungsgemäßen Verfahren eingesetzte Verstärkungselement die folgenden Eigenschaften auf: Sein Länge-/Durchmesser-Verhältnis beträgt 1 bis 10, seine Korngröße ist größer als 1 µm und sein Material stellt Kohlenstoff, Keramik, deren Kombination und in Kombination mit Metall dar. Besonders bevorzugt wird bei dem erfindungsgemäßen Verfahren sphärolithischer Koks als Verstärkungselement verwendet.

In einer bevorzugten Ausführungsform umfasst Schritt b) des erfindungsgemäßen Verfahrens die folgenden Schritte Mischen des Verstärkungselements mit einem Binder, Carbonisieren des Binders und Silizieren und Umsetzen der durch die Carbonisierung des Harzes entstandenen Kohlenstoffmatrix zu Siliciumcarbid. In dieser Ausführungsform stellt das mindestens eine Verstärkungselement bevorzugt sphärolithischer Koks dar.

Als Binder können kohlenstoffhaltige Bindemittel aus der Gruppe der Kunstharze verwendet werden. Ein bevorzugter Binder aus der Gruppe der Kunstharze stellt Phenolharz dar. Ein bevorzugtes Phenolharz stellt Novolak dar. Aber auch andere Harze, die beim Carbonisieren eine gute Koksausbeute erzielen, wie Furanharze, Polyimide oder Polyarylatharze wie z. B. Polyphenylene, können eingesetzt werden.

Zur Herstellung einer formbaren Masse aus dem Verstärkungselement und dem Binder werden 30 bis 95 Gew.-%, bevorzugt 50 bis 90 Gew.-%, bevorzugter 75 bis 60 Gew.-% Verstärkungselement mit 5 bis 70 Gew.-%, bevorzugt 10 bis 50 Gew.-%, bevorzugter 25 bis 40 Gew.-% Binder vorzugsweise bei Raumtemperatur gemischt. Nach der Beendigung des Mischvorgangs, der bis zu 30 Minuten beanspruchen kann, wird die Mischung in die Form einer Gesenk- oder in den Pressbehälter einer isostatischen Presse gefüllt, verdichtet und ggf. gehärtet. Der auf die Masse einwirkende Pressdruck beträgt vorzugsweise 0,1 bis 5,0 MPa, bevorzugter 0,5 bis 4,0 MPa. Die für die Härtung aufzuwendende Zeit, während der auch der Pressdruck aufrechterhalten wird, hängt von der Größe des herzustellenden Formkörpers und von dem verwendeten Kunstharz ab. Bei Binderharzen dauert der Härtungsvorgang im Allgemeinen 30 Minuten bis 5 Stunden. Nach dem Aushärten wird der Formkörper der Pressform entnommen und carbonisiert. Die bevorzugt angewandte Endtemperatur liegt im Bereich von 850 bis 950°C. Wie bei allen Carbonisierungs- oder Brennschritten dieses Herstellungsverfahrens sollte so gearbeitet werden, dass der Zutritt von oxidierend wirkenden Substanzen zu dem Werkstoff, der gebrannt wird, ausgeschlossen ist. Der Brennprozess wird in diesem Falle so ausgeführt, dass eine hohe Carbonisierungsrate aus dem Binder oder dem Bindersystem resultiert. Dies gelingt durch Anwendung eines Druckverkokungsverfahrens oder dadurch, dass der Temperaturgradient in der Aufheizphase im Bereich von 300 bis 600 °C niedrig, bevorzugt unter 4°C pro Stunde, gehalten wird. Für die Optimierung der Bruchdehnung des Endprodukts dieses Herstellungsverfahrens kann es vorteilhaft sein, diesem Carbonisierungsprozess noch einen Graphitierungsschritt nachzuschalten. Die Durchführung einer solchen Maßnahme ist jedoch nicht zwingend und kann aus wirtschaftlichen Gründen auch unterbleiben. Verfahren zum Graphitieren sind bekannt. Vorzugsweise wird bei Temperaturen von 1800 bis 2200 °C gearbeitet.

In einem nächsten Schritt wird dieser Werkstoff anschließend einem Silizieren und Umsetzen der durch das Carbonisieren des Harzes entstandenen Kohlenstoffmatrix zu Siliciumcarbid unterzogen. Hierdurch wird hochfestes Siliciumcarbid-Bauteil mit hervorragender Bruchzähigkeit erhalten. Hierzu kann das im Stand der Technik bekannte Silizieren mit Flüssigsilicium angewandt werden. Bei diesem Verfahren befindet sich der zu silicierende Körper in einem Behälter, auf dessen Boden sich geschmolzenes Silicium befindet. Das Silicium infiltriert infolge seiner ausgezeichneten Benetzbarkeit gegenüber Kohlenstoff durch Kapillarkräfte die Matrix des Werkstoffs und reagiert mit dem Kohlenstoff zu Siliciumcarbid. Bei genügend hohen Temperaturen, die im Bereich von ca. 2200°C liegen und ausreichend langen Einwirkungszeiten können die Kohlenstoffkörper bei Vorhandensein genügender Mengen Siliciums vollständig in SiC umgewandelt werden. Es sollte auch beachtet werden, dass graphitische, sehr gut geordnete Kohlenstoffformen langsamer zu SiC umgesetzt werden als solche, die kristallographisch gesehen weniger gut geordnet sind wie beispielsweise nur gebrannter, nicht graphitierter Kohlenstoff. Wenn das Verstärkungselement des Werkstoffs Koks darstellt, müssen bei der Durchführung dieses Verfahrensschrittes deshalb die Verfahrensbedingungen so gewählt werden, dass im Wesentlichen nur die Matrix in Siliciumcarbid umgewandelt und das Verstärkungselement im Wesentlichen nicht umgesetzt wird. Das Silicieren kann im Temperaturbereich von 1450 bis 2200°C durchgeführt werden. Bevorzugt wird jedoch im Temperaturbereich von 1500 bis 1750°C unter Vakuum gearbeitet, wobei vorzugsweise das zum Silizieren verwendete Gefäß, bzw. der zum Silizieren verwendete Ofen vor Beginn des Prozesses mit einem Inertgas, beispielsweise mit Argon gespült wird, um Reste reaktiver Gase zu entfernen. Das Aufheizen des Reaktors auf Reaktionstemperatur kann den technischen Gegebenheiten der Silizierungsanlage gemäß schnell geschehen. Nach Erreichen der Silizierungstemperatur beträgt die Zeit, die für das Infiltrieren und Reagieren zu SiC benötigt wird, 10 Minuten bis 1 Stunde. Bevorzugt wird mit einer Imprägnier- und Reaktionszeit von 0,5 Stunden gearbeitet. Die angegebenen Imprägnier- und Reaktionszeiten erlauben eine wirtschaftliche Verfahrensweise. Wo dies die Umstände erfordern, kann auch mit längeren Zeiten gearbeitet werden. Es ist auch ein Silizieren ohne Anwendung von Vakuum möglich. In diesem Falle sollte bei Temperaturen von 2100 bis 2200 °C, aber ebenfalls unter Schutzgas siliziert werden. Die Summe von Infiltrier- und Reaktionszeit liegt auch hier zwischen 10 Minuten und einer Stunde, bevorzugt bei 0,25 Stunden. Bei der Silizierung bedient man sich vorteilhafterweise der so genannten Dochttechnik. Hierbei liegen die Körper, die siliziert werden sollen, auf porösen, bezogen auf das Silicium sehr saugfähigen Kohlenstoffkörpern, deren unterer Teil im flüssigen Silicium steht. Das Silicium steigt dann durch diese Dochtkörper in die zu silizierenden Körper, ohne dass letztere direkte Verbindung mit dem Siliciumbad haben. Diese Verfahrensweise erspart aufwendige Putzarbeiten nach dem Silizieren.

Durch das vorstehende Verfahren kann ein besonders bevorzugter Werkstoff hergestellt werden, wobei optional der Schritt des Erzeugens einer definierten Porosität nachgeschaltet werden kann. Der besonders bevorzugte erfindungsgemäße Werkstoff weist 10 bis 50 Gew.-% Siliciumcarbid als Matrix und 50 bis 90 Gew.-% Koks als Verstärkungselement auf, bezogen auf das Gesamtgewicht des Werkstoffs.

Der erfindungsgemäße Werkstoff ist kostengünstig. Das erfindungsgemäße Verfahren ermöglicht die Herstellung des Werkstoffes als ein Massenprodukt. Weiterhin kann der erfindungsgemäße Werkstoff in den verschiedensten komplexen Geometrien und mit beliebiger Wandstärke hergestellt werden. Der erfindungsgemäße Werkstoff ist daher universell einsetzbar.

Der erfindungsgemäße Werkstoff findet insbesondere Verwendung als Friktionsanwendung, Abrasionsschutz, Feuerfestanwendungen, Trägerplatte, Spritzgussteil, Katalysatorträger oder Knochenersatzmaterial.

Die Verwendung des erfindungsgemäßen Werkstoffs als Friktionsanwendung bietet Vorteile. In der Friktionsanwendung findet der erfindungsgemäße Werkstoff insbesondere Verwendung als ein Bremsbelag. Alternativ kann der erfindungsgemäße Werkstoff auch als eine Bremsscheibe Verwendung finden. Ein Bremsbelag oder eine Bremsscheibe kann mittels des erfindungsgemäßen Werkstoffs kostengünstig als ein Massenprodukt zur Verwendung in Maschinen oder Fahrzeugen wie PKWs hergestellt werden. Ein Bremsbelag oder eine Bremsscheibe, die aus dem erfindungsgemäßen Werkstoff gebildet ist, kann auch beispielsweise in ein Aufzugnotsystem integriert werden.

Ebenfalls besonders geeignet ist der erfindungsgemäße Werkstoff zur Verwendung als ein Abrasionsschutz, da er verschleißbeständig ist. Der Abrasionsschutz stellt insbesondere eine Auskleidung für ein Rohr, einen Zyklon oder einen Auspuff dar. Hier ist die Möglichkeit, den Werkstoff in Form eines sehr dünnen Bauteils herzustellen, von besonderem Vorteil. Da der erfindungsgemäße Werkstoff als ein Bauteil mit beliebiger Wandstärke herstellbar und hochfest ist, eignet er sich ebenfalls zur Verwendung als Ablageplatte oder Schutzplatte. Wegen der hohen Wärmebeständigkeit des erfindungsgemäßen Werkstoffs eignet er sich zur Verwendung als komplex geformte Platte als Hochtemperatur-Bauteil. Auch eignet sich der erfindungsgemäße Werkstoff zur Verwendung als Abrasionsschutz in Form einer Düse wie beispielsweise eine Sandstrahldüse oder eine Raketendüse.

Auch als Trägerplatte lässt sich der erfindungsgemäße Werkstoff verwenden. Der erfindungsgemäße Werkstoff lässt sich als Bauteil mit beliebiger Wandstärke herstellen, ist hochfest und wärmebeständig. Er eignet sich daher insbesondere zur Verwendung als eine Trägerplatte bei Ofenprozessen.

Der erfindungsgemäße Werkstoff bietet ebenfalls Vorteile bei der Verwendung als ein Spritzgussteil. Hierbei kommen Bauteile mit beliebiger Geometrie und Wandstärke in Betracht. Aufgrund seiner hohen Verschleiß- und Wärmebeständigkeit sind insbesondere die folgenden Verwendungen von besonderem Interesse. Von Vorteil ist Verwendung des erfindungsgemäßen Werkstoffs als Motorteil wie beispielsweise als Dichtring, Gleitring oder Laufring. Aufgrund der guten Formbarkeit des erfindungsgemäßen Werkstoffs und der daraus folgenden Möglichkeit zu komplexen Geometrien geformt zu werden, findet er auch als Motorblock Verwendung. Auch seine Verwendung als Zylinderlaufbuchse oder als Kolben ist vorteilhaft. Hierzu kann der erfindungsgemäße Werkstoff weiterhin in ein Metall wie beispielsweise Aluminium oder Magnesium eingegossen bzw. von ihm infiltriert werden. Ebenfalls vorteilhaft ist seine Verwendung als Pumpengehäuse, denn er ist sehr verschleißbeständig. Auch die Verwendung des Werkstoffs als eine Feder ist aufgrund seiner Eigenschaften von Vorteil. Ebenfalls vorteilhaft ist die Verwendung des erfindungsgemäßen Werkstoffs als Turbinenschaufel beispielsweise in einem Lüftungssystem für den Brandfall oder einem Turbolader. Aufgrund seiner hohen Festigkeit, Wärme- und Chemikalienbeständigkeit findet der erfindungsgemäße Werkstoff ebenfalls eine vorteilhafte Verwendung als Rohr, Destillationskolonne, Auspuff, Krümmer oder Ventil. Wenn der erfindungsgemäße Werkstoff leitfähige Bestandteile enthält, ist er zur Verwendung als Elektrodenmaterial oder andere Komponente einer Brennstoffzelle geeignet.

Eine weitere vorteilhafte Verwendung des erfindungsgemäßen Werkstoffs stellt die Verwendung als Katalysatorträger dar. Hierzu wird an der Oberfläche des erfindungsgemäßen Werkstoffs in seiner Bauteilform an der Oberfläche eine definierte Porosität derart erzeugt, dass ein stabiler Kern bestehen bleibt. Beispielsweise wird, wenn der Werkstoff als Matrix Siliciumcarbid und als Verstärkungselement Koks umfasst, die Oberfläche des Werkstoffs unter Einwirkung von Luft oxidiert, sodass eine definierte Porosität entsteht. Der Werkstoff findet dann insbesondere als ein Filter wie ein Russpartikelfilter Verwendung.

Eine weitere vorteilhafte Verwendung des erfindungsgemäßen Werkstoffs sieht vor, den Werkstoff als ein Knochenersatzmaterial einzusetzen. Der Werkstoff lässt sich in komplexen Geometrien leicht herstellen und ist somit zur Formung von komplexen Knochenteilstrukturen geeignet. Weiterhin ist der Werkstoff hochfest und gegenüber Körperflüssigkeiten beständig. Daher ist es möglich, den Werkstoff direkt in den Körper eines Patienten als Knochenersatzmaterial in beliebiger Größe und Gestalt zu implantieren. Beispielsweise ist es möglich, anhand von Aufnahmen, die mittels eines Computertumografen erstellt werden können, den Werkstoff als passgenaues Ersatzstück für das fehlende Knochenteil herzustellen. Weiterhin bietet der Werkstoff, insbesondere wenn er als Matrix Siliciumcarbid und als Verstärkungselement Koks aufweist, die Möglichkeit derart definiert oxidiert zu werden, dass eine gewünschte Porosität erzeugt wird. Der Werkstoff eignet sich daher auch als maßgeschneidertes Trägergerüst für die Züchtung von körpereigenen Knochenzellen, das in den Körper eines Patienten mit Knochenverlust implantiert wird, damit Trägergerüst und Knochen mittels der gezüchteten Knochenzellen zusammenwachsen können.

Weitere Merkmale und Vorteile der Erfindung werden nun unter Bezugnahme auf die nachfolgenden Figuren erläutert, ohne diese auf sie einzuschränken.

Es zeigen:
- Fig. 1: eine Abbildung eines erfindungsgemäßen Werkstoffs, und
- Fig. 2: eine weitere Abbildung eines weiteren erfindungsgemäßen Werkstoffs.

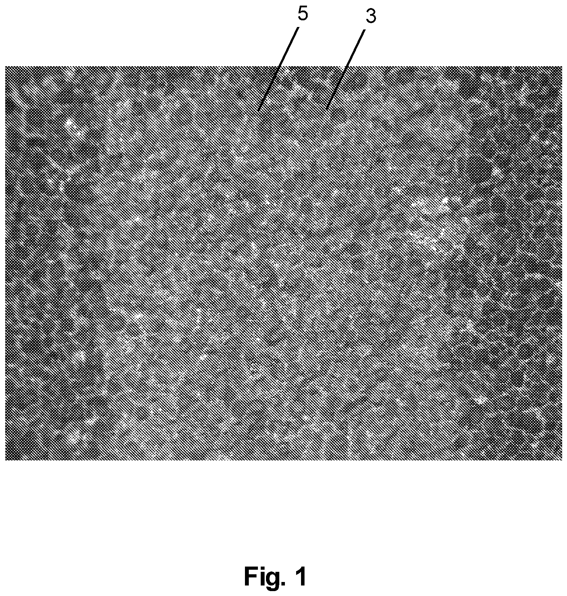

Fig. 1 zeigt eine Abbildung eines erfindungsgemäßen Werkstoffs. Der Werkstoff umfasst eine Matrix 3 aus Siliciumcarbid und als Verstärkungselement 5 Koks, wobei von der Vielzahl der auf der Abbildung erkennbaren Verstärkungselemente der Anschaulichkeit halber nur ein Verstärkungselement als 5 gekennzeichnet ist. Die kugel- bis ellipsoidförmige Gestalt des Verstärkungselements 5 ist in Fig. 1 zu erkennen. Aus Fig. 1 ist ersichtlich, dass das Verstärkungselement 5, d.h. der Koks, die Matrix 3, d.h. das Siliciumcarbid, durchsetzt. Die Durchsetzung ist homogen.

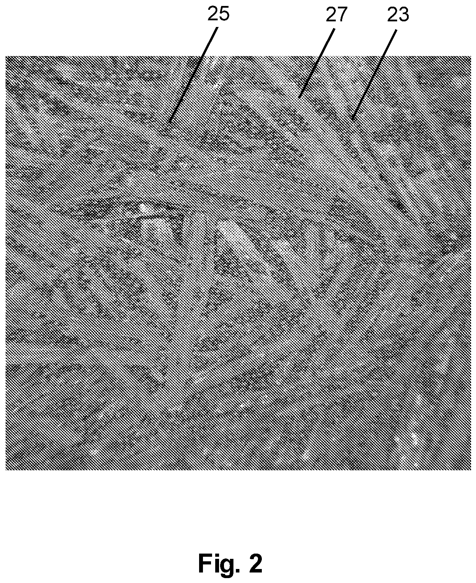

Fig. 2 zeigt eine weitere Abbildung eines weiteren erfindungsgemäßen Werkstoffs. Der erfindungsgemäße Werkstoff umfasst als Matrix 23 Siliciumcarbid und als Verstärkungselement 25 Koks. Weiterhin enthält der Werkstoff Kohlenstofffasern als Füllstoff 27. Der Anschaulichkeit halber ist von der Vielzahl der auf der Abbildung erkennbaren Verstärkungselemente und Füllstoffe nur ein Verstärkungselement als 25 gekennzeichnet und nur ein Füllstoff als 27 gekennzeichnet. Wie in Fig. 2 ersichtlich ist, durchsetzen Kokskugeln als Verstärkungselement 25 und die Kohlenstofffasern als Füllstoff 27 die Siliciumcarbid-Matrix 23. Auch hier ist die kugel- bis ellipsoidförmige Gestalt des Verstärkungselements 25 gut zu erkennen.

Weitere Merkmale und Vorteile der Erfindung werden nun unter Bezugnahme auf Beispiele erläutert, ohne diese auf sie einzuschränken.

### Beispiel 1:

### Herstellung der Pressmasse

Für die Herstellung von Formkörpern mit kugelförmigen Koks für verbesserte Bruchzähigkeit werden
1275 g Kugelkoks der Körnung 0-125 µm und
225 g Pulverharz (SP 227 der Fa. Hexion, Rotterdamm, Niederlande)
in einem Intensivmischer 2 Minuten gemischt und anschließend in eine Pressform eingefüllt.

### Herstellung des Presskörpers

Die Mischung wird auf einer Warmfließpresse bei einem Druck von 1,5 MPa und einer Temperatur von 160 °C 30 Minuten verpresst und ausgehärtet und anschließend entformt.

### Carbonisierung

Der Formkörper wird in einem Schutzgasofen unter Stickstoffatmosphäre mit einer Aufheizrate von 1 K/min auf eine Temperatur von 900°C erhitzt. Diese Temperatur wird eine Stunde gehalten. Die Abkühlung auf Raumtemperatur erfolgt ungeregelt.

### Silizierung

Dieser Formkörper wird mit Silizium in einem Vakuumofen bei Temperaturen von >1500 °C infiltriert (Flüssigphasensilizierung), wobei ein Teil des bei der Carbonisierung gebildeten Kohlenstoffs mit einem Teil des eingebrachten Siliziums zu Siliziumcarbid reagiert.

Dabei entsteht ein hochfestes CSiC- Bauteil mit verbesserter Bruchzähigkeit, welches jedoch keine Fasern enthält. Seine Eigenschaften sind in der nachstehenden Tabelle zusammengefasst.

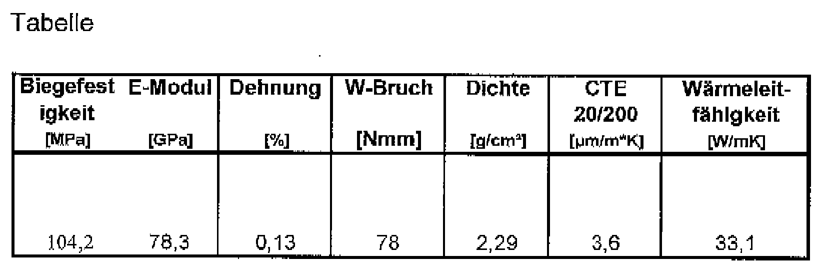

### Beispiel 2:

### Herstellung der Pressmasse

Für die Herstellung der Pressmasse werden
1200 g Kugelkoks der Körnung 0-500µm und
300 g Pulverharz (SP 227 der Fa. Hexion, Rotterdamm, Niederlande) in einem Intensivmischer 2 Minuten vorgemischt
anschließend mit
50 g - 60 g - 5% Polyvinylalkohollösung unter weiterem Mischen angefeuchtet und anschließend unter Zugabe von 30-50 g Ethanol bei Drehzahlen von 1200 - 2000 U/min 5 Minuten lang granuliert.

Dieses Granulat wird anschließend bei 40-50 °C im Trockenschrank bis zu einer Restfeuchtigkeit von 0,5-1,0 % getrocknet und kann dann in diverse Fraktionen (<1,0 mm, <2,0 mm) abgesiebt werden.

Dieses Granulat wird dann in eine Pressform gefüllt.

### Herstellung des Presskörpers

Die Mischung wird auf einer Warmfließpresse bei einem Druck von 1 - 2 MPa und einer Temperatur von 160 °C 10 bis 30 Minuten verpresst und ausgehärtet und anschließend entformt.

### Carbonisierung

Der Formkörper wird in einen Schutzgasofen unter Stickstoffatmosphäre mit einer Aufheizrate von 1 K/min auf eine Temperatur von 900 °C erhitzt. Diese Temperatur wird eine Stunde gehalten. Die Abkühlung auf Raumtemperatur erfolgt ungeregelt.

### Silizierung

Dieser Formkörper wird mit Silizium in einem Vakuumofen bei Temperaturen von >1500 °C infiltriert (Flüssigphasensilizierung), wobei ein Teil des bei der Carbonisierung gebildeten Kohlenstoffs mit einem Teil des eingebrachten Siliziums zu Siliziumcarbid reagiert.

## Patentansprüche

1. Werkstoff, umfassend eine Matrix (3, 23) und mindestens ein darin eingebrachtes Verstärkungselement (5, 25), wobei die Matrix (3, 23) Siliciumcarbid umfasst, **dadurch gekennzeichnet, dass** das Verstärkungselement (5, 25) eine kugel- bis ellipsoidförmige Gestalt aufweist und zwiebelschalenartig, das heißt mindestens 3 Schichten aufweisend, aufgebaut ist, wobei das Verstärkungselement (5, 25) Koks darstellt.

2. Werkstoff nach Anspruch 1, **dadurch gekennzeichnet, dass** der Koks sphärolitisch mit einer Zwiebelschalenstruktur vorliegt.

3. Werkstoff nach einem der Ansprüche 1 oder 2, **dadurch gekennzeichnet, dass** der Koks von hoher Härte und schlecht graphitierbar und der mittlere Schichtabstand c/2 nach 2800°C Temperaturbehandlung größer oder gleich 0,34 nm ist, welches einem maximalen Graphitierungsgrad nach Maire und Mehring von maximal 46,5 % entspricht.

4. Werkstoff nach einem oder mehreren der vorangehenden Ansprüche, **dadurch gekennzeichnet, dass** der sphärolitische Koks Russ als Verstärkungskomponente enthält.

5. Werkstoff nach einem oder mehreren der vorangehenden Ansprüche, **dadurch gekennzeichnet, dass** das Verstärkungselement (5, 25) ein Länge-/DurchmesserVerhältnis von 1 bis 10 aufweist.

6. Werkstoff nach einem oder mehreren der vorangehenden Ansprüche, **dadurch gekennzeichnet, dass** das Verstärkungselement (5, 25) thermisch vorbehandelt ist.

7. Werkstoff nach einem oder mehreren der vorangehenden Ansprüche, **dadurch gekennzeichnet, dass** er weiterhin mindestens einen Füllstoff (27) enthält.

8. Werkstoff nach einem oder mehreren der vorangehenden Ansprüche, **dadurch gekennzeichnet, dass** die Korngröße des Verstärkungselements (5, 25) mindestens 1 µm beträgt.

9. Werkstoff nach einem oder mehreren der vorangehenden Ansprüche, **dadurch gekennzeichnet, dass** er 30 bis 95 Gew.-%, bevorzugt 50 bis 90 Gew.-%, bevorzugter 75 bis 60 Gew.-%, Verstärkungselement (5, 25) und 5 bis 70 Gew.-%, bevorzugt 10 bis 50 Gew.-%, bevorzugter 25 bis 40 Gew.-%, Matrix (3, 23) und optional bis zu 40 Gew.-% Füllstoff (27) aufweist, bezogen auf das Gesamtgewicht des Werkstoffs.

10. Verfahren zur Herstellung eines Werkstoffs, umfassend die Schritte
a) Bereitstellen von mindestens einem Verstärkungselement (5, 25) von kugel- bis ellipsoidförmiger Gestalt, das zwiebelschalenartig, das heißt mindestens 3 Schichten aufweisend, aufgebaut ist, wobei das Verstärkungselement (5, 25) Koks darstellt und
b) Einbringen des Verstärkungselements (5, 25) in eine Matrix (3, 23), wobei die Matrix (3, 23) Siliciumcarbid umfasst.

11. Verfahren nach Anspruch 10, **dadurch gekennzeichnet, dass** Schritt b) den folgenden Schritt Einbringen von mindestens einem Verstärkungselement (25) und mindestens einen Füllstoff (27) in die Matrix (23) umfasst.

12. Verfahren nach einem der vorangehenden Ansprüche 10 oder 11, **gekennzeichnet durch** den folgenden Schritt c) Erzeugen einer Porosität zumindest an der Oberfläche des Werkstoffs im Anschluss an Schritt b).

13. Verfahren nach einem oder mehreren der vorangehenden Ansprüche 10 bis 12, **dadurch gekennzeichnet, dass** das Verstärkungselement (5, 25) ein Länge-/Durchmesser-Verhältnis von 1 bis 10 aufweist und die Korngröße des Verstärkungselements (5, 25) mindestens 1 µm beträgt.

14. Verfahren nach einem oder mehreren der vorangehenden Ansprüche 10 bis 13, **dadurch gekennzeichnet, dass** Schritt b) die folgenden Schritte Mischen des Verstärkungselements (5, 25) mit einem Binder, Carbonisieren des Binders und Silizieren und Umsetzen der durch die Carbonisierung des Harzes entstandenen Kohlenstoffmatrix zu Siliciumcarbid umfasst.

15. Verwendung eines Werkstoffes nach einem oder mehreren der vorangehenden Ansprüche 1 bis 9 als Friktionsanwendung, Abrasionsschutz, Trägerplatte, Spritzgussteil, Katalysatorträger oder Knochenersatzmaterial.

## Claims

1. Material comprising a matrix (3, 23) and at least one reinforcing element (5, 25) inserted therein, the matrix (3, 23) comprising silicon carbide, **characterised in that** the reinforcing element (5, 25) is of a spherical to ellipsoidal shape and has an onion skin-like structure, i.e. having at least 3 layers, the reinforcing element (5, 25) being coke.

2. Material according to claim 1, **characterised in that** the coke is spherulitic and has an onion skin-like structure.

3. Material according to either claim 1 or claim 2, **characterised in that** the coke has a high hardness and is difficult to graphitise and the average layer spacing c/2 after temperature treatment at 2800°C is greater than or equal to 0.34 nm, which corresponds to a maximum degree of graphitisation according to Maire and Mehring of 46.5%.

4. Material according to one or more of the preceding claims, **characterised in that** the spherulitic coke contains carbon black as a reinforcing component.

5. Material according to one or more of the preceding claims, **characterised in that** the reinforcing element (5, 25) has a length/diameter ratio of 1 to 10.

6. Material according to one or more of the preceding claims, **characterised in that** the reinforcing element (5, 25) is thermally pretreated.

7. Material according to one or more of the preceding claims, **characterised in that** it further contains at least one filler (27).

8. Material according to one or more of the preceding claims, **characterised in that** the grain size of the reinforcing element (5, 25) is at least 1 µm.

9. Material according to one or more of the preceding claims, **characterised in that** it has 30 to 95 wt.%, preferably 50 to 90 wt.%, more preferably 75 to 60 wt.%, of reinforcing element (5, 25) and 5 to 70 wt.%, preferably 10 to 50 wt.%, more preferably 25 to 40 wt.%, of matrix (3, 23) and optionally up to 40 wt.% of filler (27), based on the total weight of the material.

10. Method for producing a material comprising the steps of
a) providing at least one reinforcing element (5, 25) having a spherical to ellipsoidal shape and onion skin-like construction, i.e. having at least 3 layers, wherein the reinforcing element (5, 25) is coke and
b) inserting the reinforcing element (5, 25) into a matrix (3, 23), wherein the matrix (3, 23) comprises silicon carbide.

11. Method according to claim 10, **characterised in that** step b) comprises the following step of inserting at least one reinforcing element (25) and at least one filler (27) into the matrix (23).

12. Method according to either of preceding claims 10 or 11, **characterised by** the following step c) generating a porosity at least on the surface of the material following step b).

13. Method according to one or more of the preceding claims 10 to 12, **characterised in that** the reinforcing element (5, 25) has a length/diameter ratio of 1 to 10 and the grain size of the reinforcing element (5, 25) is at least 1 µm.

14. Method according to one or more of the preceding claims 10 to 13, **characterised in that** step b) comprises the following steps of mixing the reinforcing element (5, 25) with a binder, carbonising the binder and siliconising and reacting the carbon matrix, which results from carbonisation of the resin, to form silicon carbide.

15. Use of a material according to one or more of preceding claims 1 to 9 as friction application, abrasion protection, a support plate, an injection moulded part, a catalyst support or bone substitute material.

## Revendications

1. Matériau comprenant une matrice (3, 23) et au moins un élément de renforcement (5, 25) introduit dans celle-ci, la matrice (3, 23) comprenant du carbure de silicium, **caractérisé en ce que** l'élément de renforcement (5, 25) présente une forme sphérique à ellipsoïdale et est réalisé sous la forme de pelures d'oignon, c'est-à-dire qu'il comporte au moins 3 couches, l'élément de renforcement (5, 25) étant du coke.

2. Matériau selon la revendication 1, **caractérisé en ce que** le coke est sphérulitique et comporte une structure en pelures d'oignon.

3. Matériau selon l'une des revendications 1 ou 2, **caractérisé en ce que** le coke présente une dureté élevée et est peu graphitisable et l'espacement intercouche moyen c/2 après 2800°C est supérieure ou égale à 0,34 nm, ce qui correspond à un degré maximal de graphitisation selon Maire et Mehring d'au plus 46,5 %.

4. Matériau selon au moins l'une des revendications précédentes, **caractérisé en ce que** le coke sphérulitique contient du noir de carbone comme composant de renforcement.

5. Matériau selon au moins l'une des revendications précédentes, **caractérisé en ce que** l'élément de renforcement (5, 25) présente un rapport longueur/diamètre compris entre 1 et 10.

6. Matériau selon au moins l'une des revendications précédentes, **caractérisé en ce que** l'élément de renforcement (5, 25) est prétraité thermiquement.

7. Matériau selon au moins l'une des revendications précédentes, **caractérisé en ce qu'**il contient en outre au moins une charge (27).

8. Matériau selon au moins l'une des revendications précédentes, **caractérisé en ce que** la granulométrie de l'élément de renforcement (5, 25) est d'au moins 1 µm.

9. Matériau selon au moins l'une des revendications précédentes, **caractérisé en ce qu'**il comprend 30 à 95 % en poids, de manière préférée 50 à 90 % en poids, de manière plus préférée 75 à 60 % en poids, de l'élément de renforcement (5, 25) et 5 à 70 % en poids, de manière préférée 10 à 50 % en poids, de manière plus préférée 25 à 40 % en poids, de la matrice (3, 23) et éventuellement jusqu'à 40 % en poids de la charge (27), par rapport au poids total du matériau.

10. Procédé de production d'un matériau, comprenant les étapes consistant à
a) prévoir au moins un élément de renforcement (5, 25) présentant une forme sphérique à ellipsoïdale et réalisé sous la forme de pelures d'oignon, c'est-à-dire qu'il comporte au moins 3 couches, l'élément de renforcement (5, 25) étant du coke et à
b) introduire l'élément de renforcement (5, 25) dans une matrice (3, 23), la matrice (3, 23) comprenant du carbure de silicium.

11. Procédé selon la revendication 10, **caractérisé en ce que** l'étape b) comprenant l'étape suivante consistant à introduire au moins un élément de renforcement (25) et au moins une charge (27) dans la matrice (23).

12. Procédé selon l'une des revendications précédentes 10 ou 11, **caractérisé par** l'étape suivante c) de production d'une porosité au moins sur la surface du matériau à la suite de l'étape b).

13. Procédé selon au moins l'une des revendications précédentes 10 à 12, **caractérisé en ce que** l'élément de renforcement (5, 25) présente un rapport longueur/diamètre compris entre 1 et 10, et la granulométrie de l'élément de renforcement (5, 25) est d'au moins 1 µm.

14. Procédé selon au moins l'une des revendications précédentes 10 à 13, **caractérisé en ce que** l'étape b) comprenant les étapes de mélange de l'élément de renforcement (5, 25) à un liant, de carbonisation du liant et de siliconage et de réaction de la matrice de carbone formée par la carbonisation de la résine en carbure de silicium.

15. Utilisation d'un matériau selon au moins l'une des revendications précédentes 1 à 9 comme application de friction, protection contre l'abrasion, plaque de support, pièce moulée par injection, support de catalyseur ou comme matériau de remplacement osseux.
